# EUROPEAN PATENT APPLICATION

(11) **EP 4 600 891 A2**
(43) Date of publication of application: **13.08.2025**
(21) Application number: 25184215.9
(22) Date of filing: 19.02.2021
(51) Int. Cl.: G06Q 50/06

(54) **HYDROGEN SUPPLY SYSTEM, HYDROGEN STATION, AND METHOD FOR MANAGING HYDROGEN SUPPLY AND DEMAND**

(30) Priority: 27.02.2020 JP 2020031886
(62) Divisional of application: 21760055.0
(71) Applicant: ENEOS Corporation, Chiyoda-ku Tokyo 100-8162 (JP)
(72) Inventor: SEIKE, Tadashi, Tokyo 100-8162 (JP); MINODA, Ai, Tokyo (JP); MAEDA, Seiji, Tokyo (JP)
(74) Representative: Algemeen Octrooi- en Merkenbureau B.V.

(57) **Abstract**

A management center (40) is proposed, comprising a management apparatus (42) for managing a first site (10a, 10b, 30) configured to produce hydrogen and a second site (10c, 10d, 10e, 10f, 10g, 10h) to which hydrogen is supplied from the first site, wherein
the management apparatus (42) is configured to adjusts a power consumption amount of a hydrogen production device (12a, 12b, 32) included in the first site (10a, 10b, 30), on the basis of a command for adjusting supply and demand of power and information related to the second site.

## Description

### [TECHNICAL FIELD]

The present invention relates to a hydrogen supply system including a hydrogen station.

### [BACKGROUND ART]

In recent years, hydrogen has attracted attention as clean energy, and fuel cell vehicles using hydrogen as a fuel have been spreading. In order to further spread fuel cell vehicles, it is necessary to prepare a hydrogen station as a fuel supply infrastructure. In a hydrogen station, hydrogen is compressed and stored in an accumulator, and high-pressure hydrogen is charged into a fuel cell vehicle via a dispenser. Hydrogen to be a fuel is produced by a method of steam-reforming city gas, liquefied petroleum gas, or the like, a method of dehydrogenating an organic hydride such as methylcyclohexane, or the like.

Generally, there are two types of hydrogen stations: an on-site type and an off-site type. The on-site hydrogen station produces hydrogen by its own hydrogen production device and supplies the hydrogen to a fuel cell vehicle. In contrast, the off-site hydrogen station procures hydrogen produced in another site and supplies the hydrogen to a fuel cell vehicle. For transportation of hydrogen, a hydrogen trailer, a hydrogen carrying vessel, or the like is used.

In recent years, the amount of power generated by renewable energy such as sunlight and wind power has been increased. Since a power generation amount by renewable energy has a large time variation, an adjustment capability for adjusting a power supply and demand balance is required. For example, a supply and demand adjustment system has been proposed in which hydrogen is produced and stored using surplus power from renewable energy, and the stored hydrogen is transported to a hydrogen station for use and used for power generation.

### [CITATION LIST]

### [Patent Literature]

[Patent Literature 1] JP 2014-111984 A
[Patent Literature 2] JP 2019-144897 A

### [SUMMARY OF INVENTION]

### [TECHNICAL PROBLEM]

In order to transport hydrogen with high efficiency, it is necessary to compress the hydrogen to a high pressure or to cool the hydrogen to a cryogenic temperature, and it is costly to store and transport a large amount of hydrogen. In addition, when hydrogen produced by the water electrolysis reaction is used for power generation, it is not preferable from the viewpoint of energy efficiency.

The present invention has been made in view of such a situation, and one object of the present invention is to provide a technique for improving energy efficiency of a hydrogen supply system.

### [SOLUTION TO PROBLEM]

A hydrogen supply system according to an aspect of the present invention includes a plurality of hydrogen stations for supplying hydrogen gas to a fuel cell vehicle, and a management apparatus that manages supply and demand of the hydrogen gas of the plurality of hydrogen stations. The plurality of hydrogen stations include a plurality of on-site hydrogen stations. The on-site hydrogen stations each include an electrolysis device that produces hydrogen gas by an electrolytic reaction consuming power supplied from a commercial power network, a compressor that compresses the hydrogen gas produced by the electrolysis device, an accumulator that accumulates the hydrogen gas compressed by the compressor, and a dispenser that fills the fuel cell vehicle with the hydrogen gas accumulated in the accumulator. The management apparatus adjusts a power consumption amount of a plurality of electrolysis devices included in the hydrogen supply system, on the basis of a command for adjusting supply and demand of power of the commercial power network.

Another aspect of the present invention is a hydrogen supply system. This hydrogen supply system includes a plurality of hydrogen stations for supplying hydrogen gas to a fuel cell vehicle, a plurality of hydrogen production sites that produces hydrogen gas to be supplied to at least one of the plurality of hydrogen stations, and a management apparatus that manages supply and demand of hydrogen gas of the plurality of hydrogen stations and the plurality of hydrogen production sites. The hydrogen production sites each include an electrolysis device that produces hydrogen gas by an electrolytic reaction consuming power supplied from a commercial power network, and an accumulator that accumulates the hydrogen gas produced by the electrolysis device. The plurality of hydrogen stations each include a compressor that compresses the hydrogen gas supplied from at least one of the plurality of hydrogen production sites, an accumulator that accumulates the hydrogen gas compressed by the compressor, and a dispenser that fills the fuel cell vehicle with the hydrogen gas accumulated in the accumulator. The management apparatus adjusts a power consumption amount of a plurality of electrolysis devices included in the hydrogen supply system, on the basis of a command for adjusting supply and demand of power of the commercial power network.

Another aspect of the present invention is a hydrogen station. This hydrogen station includes an electrolysis device that produces hydrogen gas by an electrolytic reaction consuming power supplied from a commercial power network, a compressor that compresses the hydrogen gas produced by the electrolysis device, an accumulator that accumulates the hydrogen gas compressed by the compressor, a dispenser that fills a fuel cell vehicle with the hydrogen gas accumulated in the accumulator, and a control device that controls a power consumption amount of the electrolysis device on the basis of a command for adjusting supply and demand of power of the commercial power network.

Still another aspect of the present invention is a method for managing hydrogen supply and demand in a hydrogen supply system. The hydrogen supply system includes a plurality of hydrogen stations for supplying hydrogen gas to a fuel cell vehicle. The plurality of hydrogen stations include a plurality of on-site hydrogen stations. The on-site hydrogen stations each include an electrolysis device that produces hydrogen gas by an electrolytic reaction consuming power supplied from a commercial power network, a compressor that compresses the hydrogen gas produced by the electrolysis device, an accumulator that accumulates the hydrogen gas compressed by the compressor, and a dispenser that fills the fuel cell vehicle with the hydrogen gas accumulated in the accumulator. In this method, a command for adjusting supply and demand of power of the commercial power network is acquired, an adjustment margin of power consumption of the electrolysis device of each on-site hydrogen station is calculated, an adjustment amount of power consumption of each electrolysis device is determined within a range of adjustment margin of each electrolysis device such that a sum of adjustment amounts of power consumption of the plurality of electrolysis devices included in the hydrogen supply system becomes closer to an adjustment target amount of supply and demand of power included in the command, and the power consumption of each electrolysis device is adjusted on the basis of the determined adjustment amount.

Any combinations of the above constituents, and modifications of the expressions of the present disclosure among methods, apparatuses, systems, and the like are also effective as aspects of the present disclosure.

### [ADVANTAGEOUS EFFECTS OF INVENTION]

According to the present invention, energy efficiency of a hydrogen supply system can be increased.

### [BRIEF DESCRIPTION OF DRAWINGS]

Fig. 1 is a diagram schematically illustrating a configuration of a hydrogen station according to an embodiment.
Figs. 2A to 2C are graphs illustrating an example of a supply and demand plan for hydrogen.
Figs. 3A and 3B are graphs illustrating an update example of a hydrogen production plan.
Fig. 4 is a diagram schematically illustrating a configuration of a hydrogen supply system according to an embodiment.
Fig. 5 is a flowchart illustrating a flow of a method for managing hydrogen supply and demand according to an embodiment.

### [DESCRIPTION OF EMBODIMENTS]

Before describing the invention in detail, first, an outline thereof will be described. The present embodiment relates to a hydrogen station for supplying hydrogen to a fuel cell vehicle using hydrogen as a fuel, and particularly to a hydrogen station including a water electrolysis device for producing hydrogen. The water electrolysis device can produce hydrogen on site by electrolyzing water by consuming power supplied from a commercial power network.

In a commercial power network, it is necessary to balance supply and demand of power in order to stably supply power, and a power company that operates the commercial power network responds to fluctuations in power demand by combining various power generation methods. In recent years, the amount of power generation by renewable energy such as wind power generation and solar power generation tends to increase, but since the amount of power generation depends on weather such as wind power and sunlight, it is difficult to artificially control the amount of power generation. Therefore, a demand response mechanism for balancing supply and demand of power by adjusting the power demand amount instead of adjusting only the power supply amount is being used.

In the demand response, a consumer consuming power adjusts power consumption amount in response to a gap between supply and demand of power. The consumer who has adjusted the power consumption amount is paid a reward according to the adjustment amount. For example, when power demand is insufficient due to an increase in the amount of power supply by solar power generation in good weather, the supply and demand of power are adjusted by increasing power consumption amount. Conversely, when the power demand is excessive due to a decrease in the amount of power supply by solar power generation in bad weather, the supply and demand of power are adjusted by reducing the power consumption amount. Adjustment of supply and demand of power may be managed via an intermediary called an aggregator. The aggregator divides the adjustment target amount requested from the power supply side and distributes the divided adjustment target amount to a large number of consumers so that the large number of consumers can adjust the power consumption amount in a cooperative manner. In addition, there is also a demand response bidding system, and by bidding for an adjustment amount instructed by the power supply side or the aggregator, it is possible to acquire a right to adjust the power consumption amount and receive a reward according to the adjustment result.

A real-time property is required for adjustment of supply and demand of a commercial power network, and for example, it is necessary to provide an instructed adjustment capability in a short time such as within 5 minutes or within 30 minutes. In addition, in the case of providing the power supply and demand adjustment capability, it is necessary to continuously adjust the power consumption amount over a specified time such as 30 minutes or 1 hour. In the present embodiment, by adjusting the power consumption amount of the water electrolysis device installed in the hydrogen station, an adjustment capability for alleviating the power supply and demand gap in the commercial power network is provided. At this time, by calculating the adjustment margin of the power consumption of the water electrolysis device on the basis of the supply and demand plan of hydrogen in the hydrogen station, it is possible to quickly provide the adjustment capability within a range not affecting the supply of hydrogen. Furthermore, by controlling power consumption amounts of a plurality of water electrolysis devices installed in a plurality of hydrogen stations in a cooperative manner, it is possible to secure adjustment capability required at the minimum for bidding.

Hereinafter, the present invention will be described on the basis of preferred embodiments with reference to the drawings. The embodiments are mere examples and not intended to limit the invention, and all features described in the embodiment and combinations thereof are not necessarily essential to the invention. The same or equivalent constituent elements, members, and processes illustrated in the drawings are denoted by the same reference numerals, and redundant description will be omitted as appropriate. In addition, the scale and shape of each part illustrated in each drawing are set for convenience in order to facilitate the description, and should not be limitedly interpreted unless otherwise specified. In addition, when terms such as "first" and "second" are used in the present specification or clauses, the terms do not represent any order or degree of importance, but are used to distinguish one element from another. In addition, in each drawing, some of members that are not important for describing the embodiments are omitted.

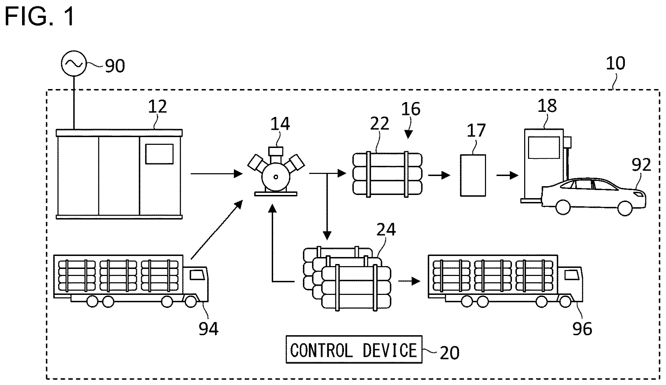

Fig. 1 is a diagram schematically illustrating a functional configuration of a hydrogen station 10 according to an embodiment. The hydrogen station 10 includes a water electrolysis device 12, a compressor 14, an accumulator 16, a pre-cooler 17, a dispenser 18, and a control device 20. The hydrogen station 10 is an on-site hydrogen station having a hydrogen production function, and produces hydrogen by operating the water electrolysis device 12.

The water electrolysis device 12 produces hydrogen gas by an electrolytic reaction that consumes power supplied from a commercial power network 90. Examples of the type of the water electrolysis device 12 include a solid polymer type, an alkali type, and a solid oxide type. The water electrolysis device 12 is desirably in a solid polymer type from the viewpoint of being installed and operated in the hydrogen station 10. In the case of the solid polymer type, space saving can be achieved as compared with other types, and treatment of alkali waste liquid is not necessary. In addition, the solid polymer type is advantageous in that it is resistant to vibration when the water electrolysis device 12 is transported to and installed in the hydrogen station 10.

Rated output is determined for the water electrolysis device 12, and it is recommended to operate the water electrolysis device 12 while maintaining the rated output. An example of the rated output of the water electrolysis device 12 is 1,600 kW, and the hydrogen production capacity at this time is 320 Nm³/h. The water electrolysis device 12 can be operated even with an output different from the rated output, and the output can be adjusted within a range from the minimum rated power to the maximum rated power. When the output of the water electrolysis device 12 is adjusted, the power consumption amount changes according to the output, and the production amount of hydrogen gas also changes according to the output. The minimum rated power of the water electrolysis device 12 is 10% to 50% of the rated output, and is, for example, 20% (for example, 320 kW) of the rated output. The maximum rated power of the water electrolysis device 12 is 120% to 200% of the rated output, and is, for example, 150% (for example, 2,400 kW) of the rated output.

The compressor 14 compresses the hydrogen gas produced by the water electrolysis device 12 to generate hydrogen gas (also referred to as pressurized hydrogen gas) having a higher pressure than the hydrogen gas that is not compressed. Examples of the compressor 14 include a reciprocating compressor (reciprocating type) using a general metal piston, an ionic compressor that substitutes a piston with a nonvolatile ionic liquid, and a diaphragm compressor that increases the pressure by pressing a stainless steel film against a metal head. The compressor 14 is preferably a reciprocating compressor having excellent followability and durability in order to cope with load fluctuation that may frequently occur in accordance with adjustment of supply and demand of power. The pressurized hydrogen gas generated by the compressor 14 is accumulated in the accumulator 16. The compressor 14 may receive hydrogen gas produced in another site, and for example, may generate pressurized hydrogen gas by compressing hydrogen gas carried into the hydrogen station 10 through the hydrogen trailer 94.

The accumulator 16 includes a high-pressure accumulator 22 and an intermediate accumulator 24. The high-pressure accumulator 22 stores high-pressure hydrogen for filling a fuel cell vehicle 92 through a dispenser 18. The pressure of the hydrogen gas accumulated in the high-pressure accumulator 22 is, for example, 82 MPa. The intermediate accumulator 24 stores hydrogen gas to be secured as a stock by the hydrogen station 10. The pressure of the hydrogen gas accumulated in the intermediate accumulator 24 is, for example, 45 MPa. An example of the capacity of the intermediate accumulator 24 is 1,500 Nm³.

The hydrogen gas accumulated in the intermediate accumulator 24 can be accumulated in the high-pressure accumulator 22 by being compressed by the compressor 14. In addition, the hydrogen gas accumulated in the intermediate accumulator 24 can be compressed by the compressor 14 and then charged into the fuel cell vehicle 92 without passing through the high-pressure accumulator 22. For example, when the hydrogen demand exceeding the production capacity of the water electrolysis device 12 occurs, the hydrogen demand can be covered by using the hydrogen gas stored in the intermediate accumulator 24. The intermediate accumulator 24 can also store hydrogen gas for supply to other hydrogen stations. For example, the hydrogen gas stored in the intermediate accumulator 24 may be supplied to other hydrogen stations by filling the hydrogen trailer 96 or the like with the hydrogen gas. To be noted, the intermediate accumulator 24 is not an essential component, and the intermediate accumulator 24 does not have to be provided in the hydrogen station 10.

The pre-cooler 17 cools the high-pressure hydrogen supplied to the fuel cell vehicle 92 via the dispenser 18 to a predetermined temperature (for example, -40°C). The pre-cooler 17 includes, for example, a refrigerator (not illustrated) for cooling the high-pressure hydrogen. By filling a hydrogen tank of the fuel cell vehicle 92 with the cooled high-pressure hydrogen, it is possible to reduce the temperature rise of the hydrogen tank of the fuel cell vehicle 92 at the time of filling with the high-pressure hydrogen.

The dispenser 18 supplies high-pressure hydrogen to the fuel cell vehicle 92 that has come to the hydrogen station 10. The pressure of the hydrogen gas charged into the fuel cell vehicle 92 is determined by regulations and laws of each country, and is, for example, 70 MPa in Japan. The amount of hydrogen gas supplied to the fuel cell vehicle 92 in one filling is, for example, 30 Nm³.

A control device 20 controls operations of various devices installed in the hydrogen station 10. The control device 20 is realized by an element or a circuit such as a CPU and a memory of a computer as a hardware configuration, and is realized by a computer program or the like as a software configuration. It should be understood by those skilled in the art that various functions of the control device 20 can be realized in various forms by a combination of hardware and software.

The control device 20 operates on the basis of the supply and demand plan of hydrogen in the hydrogen station 10. In the hydrogen supply and demand plan, a demand amount, a supply amount, and an inventory amount of hydrogen gas in the hydrogen station 10 are planned for each time.

The demand amount of hydrogen gas corresponds to a predicted value of a filling amount of hydrogen gas charged into the fuel cell vehicle 92 from the dispenser 18. The predicted value of the filling amount for each time can be calculated, for example, by integrating the filling amount per one time (for example, 30 Nm³) with the predicted number of fuel cell vehicles 92 that will come to the hydrogen station 10 per unit time. The demand amount of hydrogen gas may be predicted on a daily basis, or the demand amount of hydrogen gas for each time may be calculated from the demand for hydrogen gas per day. The demand amount of hydrogen gas may include a shipping amount of hydrogen gas supplied to another site through the hydrogen trailer 96 or the like.

The supply amount of hydrogen gas corresponds to the production amount of hydrogen gas produced by the water electrolysis device 12. The production amount of hydrogen gas can be calculated on the basis of the operation output of the water electrolysis device 12 of each time. The supply amount of hydrogen gas may include the amount of incoming hydrogen gas supplied from another site through the hydrogen trailer 94 or the like.

The inventory amount of hydrogen gas is a residual accumulation amount of hydrogen gas stored in the accumulator 16. The inventory amount of hydrogen gas may include only the residual accumulation amount of the high-pressure accumulator 22 or may be a total value of the accumulation amounts of the high-pressure accumulator 22 and the intermediate accumulator 24. The inventory amount of hydrogen gas may include an accumulation amount of a hydrogen tank different from the high-pressure accumulator 22 and the intermediate accumulator 24. For example, an accumulation amount of a hydrogen tank permanently installed in the hydrogen station 10 separately from the high-pressure accumulator 22 and the intermediate accumulator 24 may be included, or an accumulation amount of a hydrogen cylinder bundle or a hydrogen cylinder temporarily stored in the hydrogen station 10 may be included.

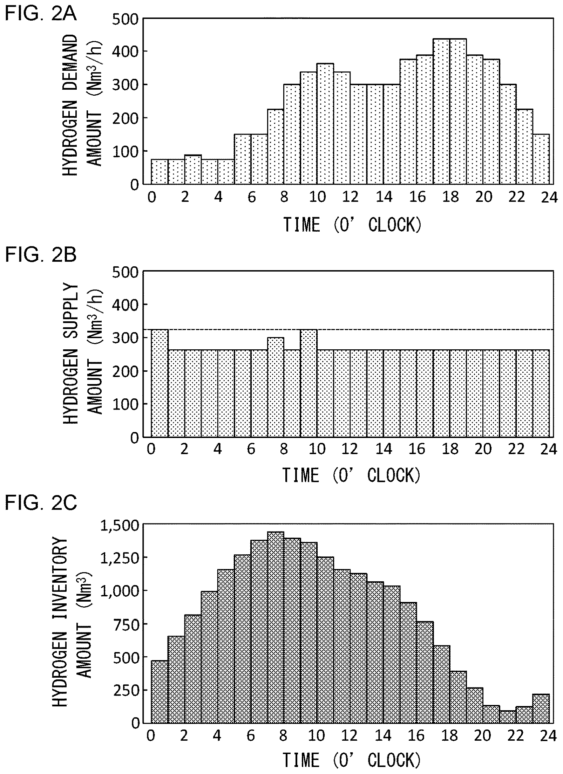

Figs. 2A to 2C are graphs illustrating an example of a supply and demand plan for hydrogen. Fig. 2A shows the hydrogen demand amount with respect to time, and shows the hydrogen filling amount with respect to time from the dispenser 18 to the fuel cell vehicle 92. The hydrogen demand amount greatly fluctuates depending on the time period. Although the hydrogen demand from the midnight 0:00 to 5:00 is small, the demand increases from around 5:00 to 6:00 in the morning, and the first peak of the demand is seen from around 10:00 to 11:00. Thereafter, the demand decreases around the noon 12:00 to 15:00, then increases from around 15:00, and a second peak of the demand is seen around 17:00 to 19:00 in the evening. Thereafter, the demand gradually decreases from 19:00 to 24:00 in the night. To be noted, the hydrogen demand amount illustrated in Fig. 2A is an example, and can vary depending on factors such as the location of the hydrogen station 10, the weather, the season, and the day of the week.

Fig. 2B shows the hydrogen supply amount with respect to time, and shows the hydrogen production amount produced by the water electrolysis device 12 with respect to time. The hydrogen supply amount is substantially constant regardless of the time period in contrast to the demand amount. The water electrolysis device 12 is characterized by faster load fluctuation and startup stop than a hydrogen production apparatus using steam reforming. However, from the viewpoint of durability such as prevention of deterioration of electrodes, it is preferable that the water electrolysis device 12 is operated while maintaining the output as constant as possible. In the graph of Fig. 2B, the hydrogen production amount of 320 Nm³/h when the water electrolysis device 12 is operated at the rated output (for example, 1,600 kW) is indicated by a broken line. In the illustrated example, the water electrolysis device 12 is operated at 80% to 100% of the rated output, and the operation output is set stepwise according to the time period. Specifically, the operation output is set to be 80%, 90%, or 100% of the rated output. To be noted, the operation output of the water electrolysis device 12 may be set in smaller increments, for example, the operation output may be settable in 1% increments, or may be settable in units of 1 kW.

Fig. 2C shows the hydrogen inventory amount with respect to time, and shows the residual accumulation amount of hydrogen gas accumulated in the accumulator 16. The residual accumulation amount of the accumulator 16 decreases according to the hydrogen demand amount in Fig. 2A and increases according to the hydrogen supply amount in Fig. 2B. The change amount of the residual accumulation amount of the accumulator 16 corresponds to the difference between the hydrogen production amount by the water electrolysis device 12 and the hydrogen demand amount by the dispenser 18. Therefore, in a time period (for example, 22:00 to 8:00) in which the hydrogen production amount is larger than the hydrogen demand amount, the residual accumulation amount increases, and in a time period (for example, 8:00 to 22:00) in which the hydrogen production amount is smaller than the hydrogen demand amount, the residual accumulation amount decreases.

The operation plan of the water electrolysis device 12 is determined on the basis of the demand amount and the inventory amount of hydrogen. The operation plan of the water electrolysis device 12 is determined such that the inventory amount of hydrogen falls within a range from a predetermined lower limit value (for example, 100 Nm³) to an upper limit value (for example, 1,500 Nm³) under a situation where the inventory amount of hydrogen fluctuates with the lapse of time according to supply and demand of hydrogen. For example, the inventory amount of hydrogen can be kept within the predetermined range by determining the operation plan of the water electrolysis device 12 so that the hydrogen demand amount and the hydrogen supply amount in one day correspond to each other. For example, by dividing the hydrogen demand amount (for example, 6,300 Nm³) per day by 24 hours, the hydrogen production amount (for example, 263 Nm³/h) per hour can be determined, and the operation output (for example, 82% of the rated output) corresponding to the hydrogen production amount can be determined. At this time, the hydrogen production amount for each time is adjusted so that the residual accumulation amount in the accumulator 16 does not fall below the lower limit value or exceed the upper limit value. In the example of Fig. 2C, the operation plan of the water electrolysis device 12 is created so that the inventory amount does not reach the upper limit value at around 7:00 to 8:00 at which the inventory amount is maximum and the inventory amount does not reach the lower limit value at around 21:00 to 22:00 at which the inventory amount is minimum. The operation plan of the water electrolysis device 12 may be adjusted on the basis of the hourly electricity charges in the commercial power network 90, and for example, the operation output in a time period (for example, midnight) in which the electricity charges are low may be made relatively high, and the operation output in a time period (for example, daytime) in which the electricity charges are high may be made relatively low.

When it is necessary to provide the power supply and demand adjustment capability to the commercial power network 90, the control device 20 calculates the adjustment margin of the power consumption amount of the water electrolysis device 12. Here, the adjustment margin of the water electrolysis device 12 is an increase/decrease range of the power consumption amount of the water electrolysis device 12 in which increase and decrease can be performed within a range in which the operation of the hydrogen station 10 is not hindered. The control device 20 calculates the adjustment margin of the water electrolysis device 12 on the basis of the hydrogen supply and demand plan, the current value of the operation output of the water electrolysis device 12, the current value of the residual accumulation amount of the accumulator 16, and the like.

First, a case of increasing the power consumption amount of the water electrolysis device 12 will be described. The operation output of the water electrolysis device 12 can be increased to the maximum rated power of the water electrolysis device 12. In this case, the adjustment margin is restricted by the difference between the current value of the operation output and the maximum rated power of the water electrolysis device 12. For example, when the water electrolysis device 12 is operated at the rated output and the maximum rated power is 150% of the rated output, the adjustment margin is 50% of the rated output. To be noted, the difference between the current value of the operation output and the maximum rated power of the water electrolysis device 12 is also referred to as "operation margin".

When the power consumption amount of the water electrolysis device 12 is increased, the production amount of hydrogen is increased as compared with the original supply and demand plan, so that the residual accumulation amount of the accumulator 16 may reach the upper limit. Since hydrogen cannot be stored beyond the maximum accumulation amount of the accumulator 16, the adjustment margin of the water electrolysis device 12 is also restricted by the accumulation margin of the accumulator 16. The accumulation margin of the accumulator 16 is a difference between the current value of the residual accumulation amount of the accumulator 16 and the maximum accumulation amount. For example, when the current value of the residual accumulation amount is 1,300 Nm³ and the maximum accumulation amount is 1,500 Nm³, the accumulation margin is 200 Nm³.

In order to adjust the supply and demand of power, it is necessary to maintain a state in which the power consumption amount is increased over a designated time (for example, 30 minutes or 1 hour), and it is necessary to prevent the hydrogen production amount during this time from exceeding the accumulation margin (for example, 200 Nm³). Therefore, a value (for example, 400 Nm³/h) obtained by dividing the accumulation margin (for example, 200 Nm³) by the power supply and demand adjustment time (for example, 0.5 hours) is the upper limit of the production amount per hour. At this time, the upper limit value of the output of the water electrolysis device 12 is the operation output (for example, 125% of the rated output) corresponding to the upper limit value of the production amount (for example, 400 Nm³/h). At this time, the adjustment margin is a difference between the current value of the driving output and the output upper limit value. For example, when the water electrolysis device 12 is operated at the rated output and the output upper limit value is 125% of the rated output, the adjustment margin is 25% of the rated output.

To be noted, the accumulation margin of the accumulator 16 may be calculated in consideration of the demand amount of hydrogen. For example, if the fuel cell vehicle 92 is filled with hydrogen from the dispenser 18 in the power supply and demand adjustment time period, the accumulation margin of the accumulator 16 increases accordingly. Therefore, the hydrogen demand amount in the power supply and demand adjustment time period may be added as the accumulation margin of the accumulator 16. For example, when the current value of the residual accumulation amount is 1,300 Nm³, the maximum accumulation amount is 1,500 Nm³, and the hydrogen demand amount in the power supply and demand adjustment time period is 300 Nm³, the residual accumulation amount may be 1,500 - 1,300 + 300 = 500 Nm³. In addition, a value (for example, 150 Nm³) obtained by multiplying the hydrogen demand amount in the power supply and demand adjustment time period by a predetermined safety coefficient (for example, 0.5) may be added to the accumulation margin. By setting the safety coefficient, it is possible to reduce the possibility that the accumulation margin is eliminated when the actual result of the hydrogen demand is smaller than the prediction.

The control device 20 calculates the adjustment margin of the water electrolysis device 12 on the basis of both the operation margin of the water electrolysis device 12 and the accumulation margin of the accumulator 16. Specifically, a relatively smaller value among the adjustment margin based on the operation margin of the water electrolysis device 12 and the adjustment margin based on the accumulation margin of the accumulator 16 is set as the adjustment margin of the water electrolysis device 12. For example, when the adjustment margin based on the operation margin of the water electrolysis device 12 is 50% of the rated output and the adjustment margin based on the accumulation margin of the accumulator 16 is 25% of the rated output, the adjustment margin of the water electrolysis device 12 is set to 25%. The control device 20 may determine the adjustment margin of the water electrolysis device 12 on the basis of either the operation margin of the water electrolysis device 12 or the accumulation margin of the accumulator 16.

Next, a case where the power consumption of the water electrolysis device 12 is reduced will be described. The operation output of the water electrolysis device 12 can be reduced to the minimum rated power of the water electrolysis device 12. In this case, the adjustment margin is restricted by the difference between the current value of the operation output and the minimum rated power of the water electrolysis device 12. For example, when the water electrolysis device 12 is operated at the rated output and the minimum rated power is 20% of the rated output, the adjustment margin is 80% of the rated output. To be noted, the difference between the current value of the operation output and the minimum rated power of the water electrolysis device 12 is also referred to as "operation margin".

When the power consumption amount of the water electrolysis device 12 is reduced, the production amount of hydrogen is reduced as compared with the original supply and demand plan, so that the residual accumulation amount of the accumulator 16 may reach the lower limit. For example, if the accumulator 16 becomes empty, hydrogen cannot be supplied to the fuel cell vehicle 92 that has come to the hydrogen station 10, which hinders the operation of the hydrogen station 10. Therefore, the adjustment margin of the water electrolysis device 12 is also restricted by the hydrogen demand amount in the power supply and demand adjustment time period. In order to meet the hydrogen demand, it is necessary to produce the hydrogen shortage amount obtained by subtracting the current value of the residual accumulation amount from the hydrogen demand amount in the power supply and demand adjustment time period. For example, when the hydrogen demand amount in the power supply and demand adjustment time period is 240 Nm³ and the current value of the residual accumulation amount is 144 Nm³, the hydrogen shortage amount is 96 Nm³. At this time, a value (for example, 96 Nm³/h) obtained by dividing the hydrogen shortage amount (for example, 96 Nm³) by the power supply and demand adjustment time (for example, 1 hour) is the lower limit value of the production amount per hour. The lower limit value of the output of the water electrolysis device 12 is an operation output (for example, 30% of the rated output) corresponding to the lower limit value of the production amount (for example, 96 Nm³/h). At this time, the adjustment margin is a difference between the current value of the operation output and the lower limit value of the output. For example, when the water electrolysis device 12 is operated at the rated output and the lower limit value of the output is 30% of the rated output, the adjustment margin is 70% of the rated output.

To be noted, the hydrogen shortage amount in the power supply and demand adjustment time period may be calculated in consideration of a lower limit value (for example, 100 Nm³) of the residual accumulation amount serving as a buffer. The lower limit value of the residual accumulation amount may match the capacity of the high-pressure accumulator 22, or may be a value obtained by further adding a buffer to the capacity of the high-pressure accumulator 22. By setting the lower limit value of the residual accumulation amount to a value equal to or larger than the capacity of the high-pressure accumulator 22, a state in which the high-pressure accumulator 22 is fully filled with the high-pressure hydrogen can be maintained, and hydrogen gas can be always and immediately supplied to the fuel cell vehicle 92 visiting the hydrogen station 10. In addition, the hydrogen shortage amount may be calculated by using a value (for example, 192 Nm³) obtained by multiplying the hydrogen demand amount in the power supply and demand adjustment time period by a predetermined safety coefficient (for example, 2). By setting the safety coefficient, it is possible to reduce the possibility that the stock of hydrogen runs out when the actual hydrogen demand exceeds the prediction.

The control device 20 calculates the adjustment margin of the water electrolysis device 12 on the basis of both the operation margin of the water electrolysis device 12 and the hydrogen shortage amount in the power supply and demand adjustment time period. Specifically, a relatively smaller value among the adjustment margin based on the operation margin of the water electrolysis device 12 and the adjustment margin based on the hydrogen shortage amount in the power supply and demand adjustment time period is set as the adjustment margin of the water electrolysis device 12. For example, when the adjustment margin based on the operation margin of the water electrolysis device 12 is 80% of the rated output and the adjustment margin based on the hydrogen shortage amount in the power supply and demand adjustment time period is 70% of the rated output, the adjustment margin of the water electrolysis device 12 is set to 70%. The control device 20 may determine the adjustment margin of the water electrolysis device 12 on the basis of either the operation margin of the water electrolysis device 12 or the hydrogen shortage amount in the power supply and demand adjustment time period.

When providing the commercial power network 90 with a power supply and demand adjustment capability, the control device 20 adjusts the power consumption amount of the water electrolysis device 12 within the range of the calculated adjustment margin. The control device 20 adjusts the power consumption amount of the water electrolysis device 12 within the range of the adjustment margin to be closer to an adjustment target amount instructed from the power supply side or the aggregator, for example. When the power consumption amount of the water electrolysis device 12 is adjusted, the control device 20 may calculate an actual value of the adjustment amount of the power consumption amount. For example, the actual value of the adjustment amount may be obtained by measuring the power consumption amount of the water electrolysis device 12 in the power supply and demand adjustment time period and calculating a difference from the power consumption amount based on the initial operation plan or the power consumption amount immediately before the adjustment.

When providing the commercial power network 90 with the power supply and demand adjustment capability, the control device 20 may update the operation plan of the water electrolysis device 12 so that excess or deficiency of the hydrogen production amount caused by the adjustment of the power consumption amount is eliminated or alleviated. For example, when the power consumption is increased in the power supply and demand adjustment time period, the operation output in a time period different from the power supply and demand adjustment time period may be reduced as compared with the original plan. Conversely, when the power consumption is reduced in the power supply and demand adjustment time period, the operation output in a time period different from the power supply and demand adjustment time period may be increased as compared with the original plan. When the operation plan is updated, similarly to when the operation plan is created, the inventory amount for each time is determined to fall within a range from a predetermined lower limit value to an upper limit value.

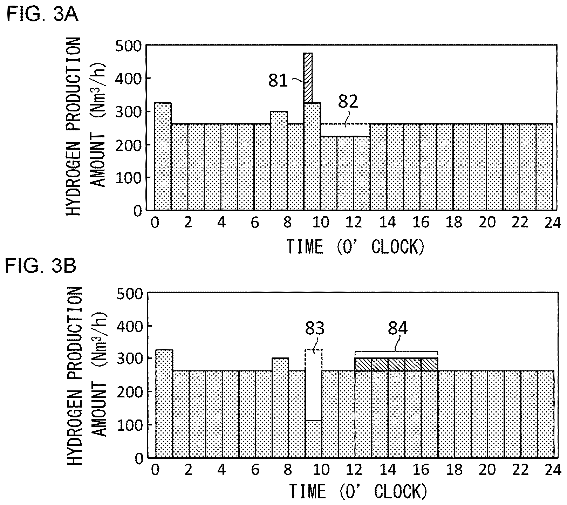

Figs. 3A and 3B are graphs illustrating an update example of a hydrogen production plan. Fig. 3A illustrates a production plan for each time in a case where adjustment for increasing the power consumption is made. In Fig. 3A, adjustment for increasing the power consumption amount is made in 30 minutes from 9:00 to 9:30, and the hydrogen production amount of a portion indicated by a reference numeral 81 is added to the initial plan. In order to adjust the added hydrogen production amount, the hydrogen production amount is adjusted for 3 hours from 10:00 to 13:00, and the hydrogen production amount of a portion indicated by a reference numeral 82 is subtracted from the initial plan. Fig. 3B illustrates a production plan for each time in a case where adjustment for reducing the power consumption is made. In Fig. 3B, adjustment for reducing the power consumption amount is made in 1 hour from 9:00 to 10:00, and the hydrogen production amount of a portion indicated by a reference numeral 83 is subtracted from the initial plan. In order to adjust the subtracted hydrogen production amount, the hydrogen production amount is adjusted for 5 hours from 12:00 to 17:00, and the hydrogen production amount of a portion indicated by a reference numeral 84 is added to the initial plan.

In the example shown in Figs. 3A and 3B, the production plan is updated so that the adjustment time for the hydrogen production amount (for example, 3 hours or 5 hours) is longer than the adjustment time for the supply and demand of power (for example, 30 minutes or 1 hour). By updating the production plan in this manner, it is possible to suppress fluctuation of the operation output of the water electrolysis device 12 and to further stabilize the output of the water electrolysis device 12. To be noted, the production plan may be updated so that the adjustment time for the supply and demand of power and the adjustment time for the hydrogen production amount are equal, or the production plan may be updated so that the adjustment time for the hydrogen production amount is shorter than the adjustment time for the supply and demand of power. In addition, the time period for adjusting the hydrogen production amount may be immediately after the power supply and demand adjustment time period, or may be set with a time interval from the power supply and demand adjustment time period. The time period for adjusting the hydrogen production amount may be the day on which the supply and demand of power are adjusted, or may be the next day or later. In addition, when the time from the command to adjust the supply and demand of power to the adjustment of the supply and demand of power is long, the hydrogen production amount may be adjusted before the power supply and demand adjustment time period.

In the examples illustrated in Figs. 2A to 3B, a case where the operation plan of the water electrolysis device 12 is created on a daily basis has been described. In another embodiment, the operation output of the water electrolysis device 12 may be determined each time. For example, a configuration in which only the operation plan of the water electrolysis device 12 in an immediate period from the current time until elapse of a predetermined time (for example, 30 minutes or 1 hour) is determined may be employed. Specifically, a scheduled value of the hydrogen production amount in the immediate period is calculated on the basis of the predicted value of the hydrogen demand amount in the immediate period and the current value of the hydrogen inventory amount. The operation output may be determined on the basis of the calculated scheduled value of the hydrogen production amount. In addition, the adjustment margin of the water electrolysis device 12 may also be calculated each time. For example, the adjustment margin of the water electrolysis device 12 may be calculated on the basis of the current value of the operation output of the water electrolysis device 12, the scheduled value of the hydrogen production amount in the immediate period, the predicted value of the hydrogen demand amount in the immediate period, and the current value of the hydrogen inventory amount. The power consumption amount in the immediate period of water electrolysis device 12 may be adjusted on the basis of the adjustment margin calculated in this way. In addition, the operation plan of the water electrolysis device 12 may be determined and the adjustment margin may be calculated without using the predicted value of the hydrogen demand amount. For example, the operation plan of the water electrolysis device 12 may be determined and the adjustment margin may be calculated on the basis of only the current value of the hydrogen inventory amount.

Next, coordination control of power consumption amounts in a plurality of hydrogen stations will be described. In order to popularize fuel cell vehicles using hydrogen as a fuel, it is necessary to prepare hydrogen stations at various places to improve convenience. Similar to a fuel station for gasoline, diesel fuel, or the like, a form in which a large hydrogen station is provided along a highway and a small hydrogen station is provided in an urban area can be considered. In the case of gasoline, diesel fuel, and the like, it is necessary to transport fuel produced in a large-scale petroleum refining plant to each fuel station by using a carrier ship, a railway, a tank truck, or the like. In contrast, in the case of hydrogen, since hydrogen can be locally produced using a small water electrolysis device, transportation cost can be suppressed. In addition, even in the case of a small hydrogen station in which a water electrolysis device cannot be installed due to factors such as location, demand, and cost, transportation cost can be reduced by transporting hydrogen produced in a nearby hydrogen station or hydrogen production site. Furthermore, by adjusting the power consumption amount of each water electrolysis device installed in the plurality of hydrogen stations in a cooperative manner, it is possible to provide a great adjustment capability to the supply and demand of power of the commercial power network. As a result, it is possible to efficiently use the renewable energy having a large output fluctuation and to suppress the transportation cost of hydrogen, so that it is possible to enhance the energy efficiency in the whole society.

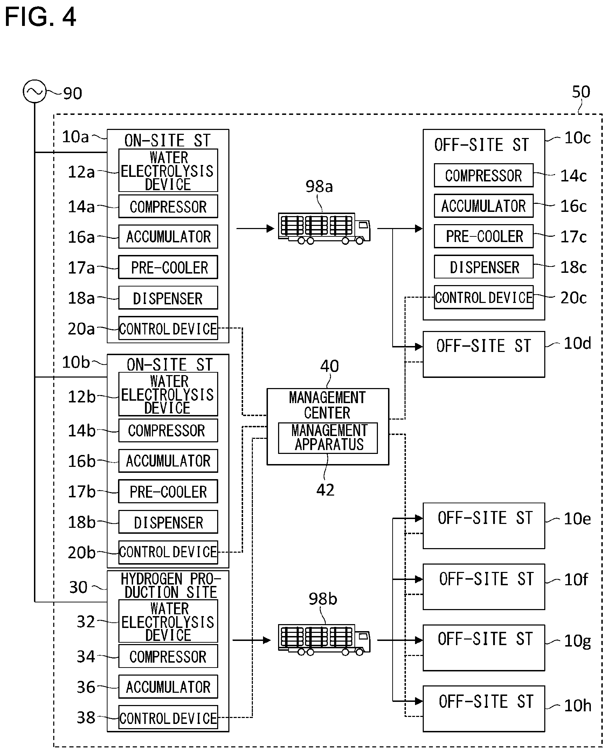

Fig. 4 is a diagram schematically illustrating a configuration of a hydrogen supply system 50 according to an embodiment. The hydrogen supply system 50 includes a plurality of hydrogen stations 10a, 10b, 10c, 10d, 10e, 10f, 10g, and 10h, a hydrogen production site 30, and a management center 40. The hydrogen supply system 50 is a hydrogen supply network for supplying hydrogen to an entire specific region.

The plurality of hydrogen stations 10a to 10h include a plurality of on-site hydrogen stations (also referred to as on-site STs) 10a and 10b and a plurality of off-site hydrogen stations (also referred to as off-site STs) 10c to 10h. In the example of Fig. 4, two on-site STs and six off-site STs are included, but the number of the on-site STs and the number of the off-site STs are not particularly limited, and a smaller number or a larger number of hydrogen station than in the illustrated example may be included.

The on-site STs 10a and 10b have facilities for producing hydrogen. For example, the on-site ST 10a includes a water electrolysis device 12a, a compressor 14a, an accumulator 16a, a pre-cooler 17a, a dispenser 18a, and a control device 20a, and is configured similarly to the hydrogen station 10 according to the above-described embodiment. In addition, the on-site ST 10b includes a water electrolysis device 12b, a compressor 14b, an accumulator 16b, a pre-cooler 17b, a dispenser 18b, and a control device 20b, and is configured similarly to the hydrogen station 10 according to the above-described embodiment.

The off-site STs 10c to 10h do not have facilities for producing hydrogen. For example, the off-site ST 10c includes a compressor 14c, an accumulator 16c, a pre-cooler 17c, a dispenser 18c, and a control device 20c, but does not include a water electrolysis device. Therefore, the off-site STs 10c to 10h are configured similarly to those obtained by removing the water electrolysis device 12 from the hydrogen station 10 according to the above-described embodiment. The off-site STs 10c to 10h procure hydrogen produced at other sites and supply hydrogen. In the example of Fig. 4, hydrogen gas produced at the on-site ST 10a or a hydrogen production site 30 is transported to each of the off-site STs 10c to 10h using hydrogen trailers 98a and 98b.

The hydrogen production site 30 has a facility for producing hydrogen, but does not have a facility for supplying hydrogen to the fuel cell vehicle 92. The hydrogen production site 30 includes a water electrolysis device 32, a compressor 34, an accumulator 36, and a control device 38, but does not include a pre-cooler and a dispenser. The hydrogen production site 30 may include a water electrolysis device 32 larger than the water electrolysis devices 12a and 12b of the on-site STs 10a and 10b, and may have a higher hydrogen production capacity than the on-site STs 10a and 10b.

The control device 38 of the hydrogen production site 30 creates a production plan of the water electrolysis device 32 on the basis of the supply and demand hydrogen at the off-site STs 10e to 10h to which hydrogen is to be supplied. When it is necessary to adjust the supply and demand of power of the commercial power network 90, the control device 38 of the hydrogen production site 30 calculates the adjustment margin of the power consumption of the water electrolysis device 32 on the basis of the supply and demand of hydrogen and the hydrogen inventory amount of the off-site STs 10e to 10h serving as supply destinations, the production plan of the water electrolysis device 32, the residual accumulation amount of the accumulator 36, and the like. The adjustment margin of the water electrolysis device 32 can be calculated in a similar manner to the adjustment margin of the hydrogen station 10 according to the above-described embodiment.

The plurality of on-site STs 10a and 10b and the hydrogen production site 30 included in the hydrogen supply system 50 consume power supplied from the same commercial power network 90 to produce hydrogen. Therefore, the plurality of on-site STs 10a and 10b and the hydrogen production site 30 included in the hydrogen supply system 50 have adjustment capability for supply and demand of power on the same commercial power network 90.

The management center 40 includes a management apparatus 42 for managing overall supply and demand of hydrogen in the hydrogen supply system 50. The management apparatus 42 is realized by an element or a circuit such as a CPU and a memory of a computer as a hardware configuration, and is realized by a computer program or the like as a software configuration. It should be understood by those skilled in the art that various functions of the management apparatus 42 can be realized in various forms by a combination of hardware and software.

The management apparatus 42 is connected to each control device of the plurality of hydrogen stations 10a to 10h and the hydrogen production site 30, and supports creation of a supply and demand plan of hydrogen in each site. For example, the on-site ST 10a needs to supply part of the hydrogen gas produced by the water electrolysis device 12a to the two off-site STs 10c and 10d. The management apparatus 42 notifies the on-site ST 10a of the demand amount and the inventory amount of hydrogen gas at the off-site STs 10c and 10d serving as supply destinations, and supports the on-site ST 10a to create a supply and demand plan in consideration of the hydrogen demand at the supply destinations. Similarly, the hydrogen production site 30 needs to supply hydrogen gas produced by the water electrolysis device 32 to the four off-site STs 10e to 10h. The management apparatus 42 notifies the hydrogen production site 30 of the demand amount and the inventory amount of hydrogen gas of the off-site STs 10e to 10h serving as supply destinations, and supports the hydrogen production site 30 to create a production plan according to the hydrogen demand at the supply destinations. The management apparatus 42 may create a transportation plan of hydrogen gas from the on-site ST 10a or the hydrogen production site 30 to the off-site STs 10c to 10h. The management apparatus 42 may collectively create a supply and demand plan of hydrogen at each site.

The management apparatus 42 acquires a command for adjusting the supply and demand of power of the commercial power network 90. The management apparatus 42 receives, for example, an adjustment command issued by a power company or an aggregator of the commercial power network 90 via the Internet. In addition, an adjustment command may be received by telephone, FAX, e-mail, or the like, and the person in charge who has received the command may input the content of the adjustment command to the management apparatus 42. The adjustment command includes a time period in which the supply and demand of power should be adjusted and an adjustment target amount of the supply and demand of power.

When acquiring a command for adjusting supply and demand of power from the commercial power network 90, the management apparatus 42 acquires adjustment margin of power consumption of the plurality of on-site STs 10a and 10b and the water electrolysis devices 12a, 12b, and 32 at the hydrogen production site 30. The management apparatus 42 requests the plurality of on-site STs 10a and 10b and the control devices 20a, 20b, and 38 of the hydrogen production site 30 to calculate the adjustment margin of the water electrolysis devices 12a, 12b, and 32. When requesting the calculation of the adjustment margin, the management apparatus 42 may designate a time in which the supply and demand of power should be adjusted. The control devices 20a, 20b, and 38 in respective sites calculate the adjustment margin of the water electrolysis devices 12a, 12b, and 32 on the basis of the request from the management apparatus 42, and transmit the calculated adjustment margin to the management apparatus 42. The control devices 20a, 20b, and 38 in respective sites may transmit the latest information of the supply and demand plan of hydrogen in each site to the management apparatus 42. For example, the current value of the production amount of hydrogen gas and the residual accumulation amount in each site may be transmitted to the management apparatus 42. To be noted, the management apparatus 42 may calculate the adjustment margin of the power consumption of the water electrolysis devices 12a, 12b, and 32 in respective sites on the basis of the supply and demand plan of hydrogen in the respective sites.

The management apparatus 42 determines the adjustment amount of the power consumption of the entire hydrogen supply system 50 within the range of the adjustment margin of each site on the basis of the adjustment margin of the power consumption of the water electrolysis devices 12a, 12b, and 32 of respective sites. For example, the management apparatus 42 sets the total value of the adjustment margin of respective sites as the adjustment amount of the entire system. The management apparatus 42 may set the adjustment amount in the entire system to be smaller than the total value of the adjustment margin of respective sites. For example, when the adjustment target amount of the supply and demand of power is set stepwise in units of 1,000 kW, 5,000 kW, or the like, the adjustment amount of the entire system may be determined so as to match the stepwise adjustment target amount. The management apparatus 42 may participate in bidding for acquiring the right of adjustment of supply and demand of power within the range of the total value of the adjustment margin of respective sites, and determine the adjustment amount of the entire system on the basis of the adjustment amount that has been successfully bid.

The management apparatus 42 distributes the adjustment amount of the entire system to respective sites and determines the adjustment amount of the power consumption of each site. The management apparatus 42 may equally distribute the adjustment amount of the power consumption to respective sites, and may set a value obtained by multiplying the adjustment margin of each site by a common distribution rate as the adjustment amount of each site. The common distribution rate corresponds to the ratio of the adjustment amount in the entire system to the total value of the adjustment margin of the power consumption of respective sites. For example, when the total value of the adjustment margin of the power consumption of respective sites is 5,800 kW and the adjustment amount of the entire system is 5,000 kW, the distribution rate is 86.2%.

The management apparatus 42 may distribute the adjustment amount of the power consumption to respective sites with a gradient. The management apparatus 42 may determine the adjustment amount of each site according to the magnitude of the adjustment margin of each site. For example, the adjustment amount may be made relatively small for a site having a relatively small adjustment margin, and the adjustment amount may be made relatively large for a site having a relatively large adjustment margin. The management apparatus 42 may individually determine the distribution rate of each site according to the magnitude of the adjustment margin of each site. The adjustment amount distributed to a site having a relatively small adjustment margin may be a value obtained by multiplying the adjustment margin of the site by a distribution rate (for example, 80%) smaller than the common distribution rate (for example, 86.2%). The adjustment amount distributed to the site having a relatively large adjustment margin may be a value obtained by multiplying the adjustment margin of the site by a distribution rate (for example, 90%) larger than the common distribution rate (for example, 86.2%). The management apparatus 42 may distribute the adjustment amount of the power consumption to respective sites with a gradient on the basis of the production amount of hydrogen gas and the current value of the residual accumulation amount in each site. In addition, when the production capacity of the water electrolysis device in each site is different for each site (for example, in the case of 600 Nm³/h, 300 Nm³/h and 100 Nm³/h), the adjustment amount of the power consumption may be distributed with a gradient according to the production capacity of each site. Adjustment according to the current value of the production capacity of the water electrolysis device in each site may be performed, and for example, adjustment may be performed in consideration of a decrease in the output of the water electrolysis device derived from deterioration or the like caused by use for a long period. In addition, the power consumption may be adjusted only in the remaining sites (for example, the on-site ST 10b and the hydrogen production site 30) without adjusting the power consumption in some site (for example, the on-site ST 10a).

The management apparatus 42 sends a command for designating a time period for adjusting the supply and demand of power and an adjustment amount of the power consumption to the site where the power consumption should be adjusted. The management apparatus 42 may send a command for designating the operation output of the water electrolysis device in each site instead of sending the command for designating the adjustment amount of the power consumption. The control device in the site that acquires the command adjusts the operation output of the water electrolysis device in the designated time period to realize the designated adjustment amount of the power consumption. By the respective sites adjusting the power consumption in cooperation with each other, the adjustment target amount of the supply and demand of power instructed from the power company or the aggregator can be realized in the entire hydrogen supply system 50.

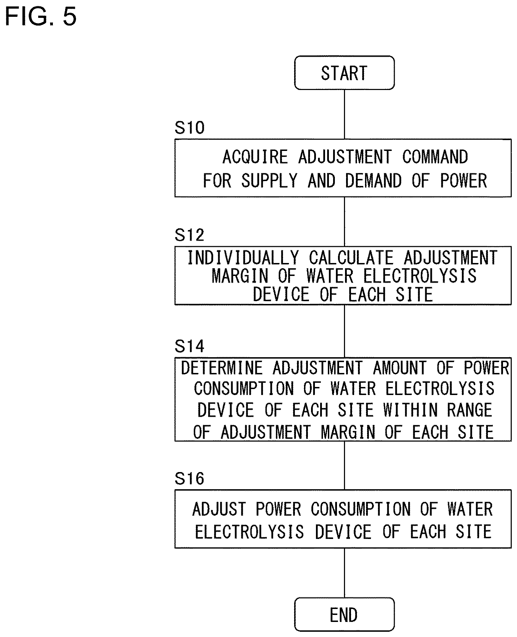

Fig. 5 is a flowchart illustrating a flow of a method for managing hydrogen supply and demand according to an embodiment. The management apparatus 42 acquires a command for adjusting the supply and demand of power of the commercial power network 90 (S10). The control devices 20a, 20b, and 38 in respective sites individually calculate the adjustment margin of power consumption of the water electrolysis devices 12a, 12b, and 32 in respective sites on the basis of the command from the management apparatus 42 (S12). The management apparatus 42 determines the adjustment amount of the power consumption of the water electrolysis devices 12a, 12b, and 32 in respective sites within the range of the adjustment margin of the respective sites (S14). The control devices 20a, 20b, and 38 in the respective sites adjust the power consumption of the water electrolysis devices 12a, 12b, and 32 in the respective sites on the basis of the determined adjustment amount (S16).

According to the present embodiment, it is possible to provide the commercial power network 90 with a great adjustment capability that cannot be achieved by a single electrolysis device. For example, when the power generation amount from the renewable energy is large, the operation output of each electrolysis device can be increased to increase the ratio of the hydrogen production amount using the renewable energy. In addition, by lowering the operation output of each electrolysis device when power generation using the renewable energy is not expected, the ratio of the hydrogen production amount using power not derived from renewable energy can be decreased. As a result, renewable energy having a large output fluctuation can be efficiently used. In addition, since hydrogen can be produced on site using the water electrolysis device and consumed on site, the transport cost of hydrogen can also be suppressed. Therefore, according to the present embodiment, it is possible to contribute to improvement of energy efficiency in the whole society.

In the above-described embodiment, at least one of the plurality of off-site STs 10c to 10h may receive supply of hydrogen gas from a plurality of sites. For example, the off-site ST 10c may receive supply of hydrogen gas from the plurality of on-site STs 10a and 10b, or may receive supply of hydrogen gas from both the on-site ST 10a and the hydrogen production site 30. In addition, at least one of the plurality of on-site STs 10a and 10b may receive supply of hydrogen gas from the hydrogen production site 30. That is, the hydrogen production site 30 may supply hydrogen gas not only to the plurality of off-site STs 10e to 10h but also to at least one of the plurality of on-site STs 10a and 10b. The hydrogen supply system 50 may include a hub-type hydrogen station. The hub-type hydrogen station is configured to receive supply of hydrogen gas from another site (hydrogen production site or on-site hydrogen station) and supply hydrogen gas to another site (off-site or on-site hydrogen station). The hub-type hydrogen station may be an on-site type having a water electrolysis device or an off-site type having no water electrolysis device.

In the above-described embodiment, the hydrogen supply system 50 does not have to include the hydrogen production site 30. The hydrogen supply system 50 may include a site having an electrolysis device different from the water electrolysis device. For example, an organic hydride production site having an electrolysis device for producing an organic hydride by an electrolytic reaction consuming power supplied from the commercial power network 90 may be provided. The organic hydride is a liquid that easily generates hydrogen gas by a dehydrogenation reaction, and examples thereof include methylcyclohexane, cyclohexane, decalin and derivatives thereof, and 2-propanol. For example, methylcyclohexane can be produced by an electrolytic reaction in which hydrogen derived from water is added to toluene, and hydrogen gas can be produced by a dehydrogenation reaction of methylcyclohexane. Since the organic hydride is a liquid, the transport cost thereof is lower than that of hydrogen gas. Therefore, in the hydrogen supply system 50, an organic hydride may be produced, the produced organic hydride may be transported to another site, and hydrogen gas may be produced from the organic hydride in another site.

The hydrogen supply system 50 may include an organic hydride production site and an on-site hydrogen station that produces hydrogen by a dehydrogenation reaction of the organic hydride. The hydrogen supply system 50 may provide an adjustment capability for the supply and demand of power to the commercial power network 90 by adjusting the power consumption of the electrolysis device in the organic hydride production site. The adjustment margin of the power consumption in the organic hydride production site may be determined on the basis of the supply and demand plan of the organic hydride in the organic hydride production site. The supply and demand plan for the organic hydride may include hourly plans for the demand amount, production amount, and inventory amount of the organic hydride. The demand amount of the organic hydride may be determined on the basis of the supply and demand plan of hydrogen in the on-site hydrogen station serving as a supply destination.

The supply destination of the organic hydride does not have to be an on-site hydrogen station, and may be a hydrogen production site having no facility for filling a fuel cell vehicle. This hydrogen production site has a hydrogen production device for producing hydrogen by a dehydrogenation reaction of an organic hydride. This hydrogen production site may supply hydrogen gas to an off-site hydrogen station. The supply and demand plan of this hydrogen production site is determined on the basis of the supply and demand plan of hydrogen in the off-site hydrogen station serving as a supply destination. In this way, a hydrogen supply network may be constructed by a combination of an organic hydride production site, a hydrogen production site, and an off-site hydrogen station. In this case, the adjustment margin of the power consumption in the organic hydride production site may be determined on the basis of the supply and demand plan of hydrogen in the off-site hydrogen station serving as the final supply destination of hydrogen.

In the above-described embodiment, the hydrogen supply system may be configured not to include the on-site hydrogen station. In this case, the hydrogen supply system may include a plurality of hydrogen production sites and a plurality of off-site hydrogen stations. Similarly to the hydrogen production site 30 described above, each hydrogen production site may have a water electrolysis device, a compressor, an accumulator, and a control device. Similarly to the off-site STs 10c to 10h, each off-site hydrogen station may have a compressor, an accumulator, a pre-cooler, a dispenser, and a control device. Each off-site hydrogen station may receive supply of hydrogen gas from at least one of the plurality of hydrogen production sites. The supply and demand plan of each hydrogen production site may be determined on the basis of the supply and demand plan of hydrogen in the off-site hydrogen station serving as a supply destination. At this time, by adjusting the power consumption of the plurality of water electrolysis devices installed in the plurality of hydrogen production sites, the commercial power network may be provided with an adjustment capability for the supply and demand of power.

The embodiments of the present invention have been described in detail above. The above-described embodiments are merely specific examples for carrying out the present invention.

### [INDUSTRIAL APPLICABILITY]

According to the present invention, energy efficiency of a hydrogen supply system can be increased.

### [REFERENCE SIGNS LIST]

10 hydrogen station, 12 water electrolysis device, 14 compressor, 16 accumulator, 17 pre-cooler, 18 dispenser, 20 control device, 22 high-pressure accumulator, 24 intermediate accumulator, 30 hydrogen production site, 32 water electrolysis device, 34 compressor, 36 accumulator, 38 control device, 42 management apparatus, 50 hydrogen supply system, 90 commercial power network, 92 fuel cell vehicle.
CLAUSE 1. A hydrogen supply system comprising a plurality of hydrogen stations for supplying hydrogen gas to a fuel cell vehicle, and a management apparatus that manages supply and demand of the hydrogen gas of the plurality of hydrogen stations, wherein
   the plurality of hydrogen stations include a plurality of on-site hydrogen stations,
   each of the on-site hydrogen stations includes:
      an electrolysis device that produces hydrogen gas by an electrolytic reaction consuming power supplied from a commercial power network;
      a compressor that compresses the hydrogen gas produced by the electrolysis device;
      an accumulator that accumulates the hydrogen gas compressed by the compressor; and
      a dispenser that fills the fuel cell vehicle with the hydrogen gas accumulated in the accumulator, and
      the management apparatus adjusts a power consumption amount of a plurality of electrolysis devices included in the hydrogen supply system, on the basis of a command for adjusting supply and demand of power of the commercial power network.
CLAUSE 2. The hydrogen supply system according to clause 1, wherein the management apparatus determines, on the basis of an adjustment margin of power consumption of each electrolysis device, an adjustment amount of power consumption of each electrolysis device within a range of adjustment margin of each electrolysis device such that a sum of adjustment amounts of power consumption of the plurality of electrolysis devices becomes closer to an adjustment target amount of supply and demand of power included in the command.
CLAUSE 3. The hydrogen supply system according to clause 2, wherein the adjustment margin of the power consumption of the electrolysis device included in each of the on-site hydrogen stations is calculated on the basis of a demand amount, supply amount, and inventory amount of hydrogen gas in each of the on-site hydrogen stations.
CLAUSE 4. The hydrogen supply system according to clause 2 or 3, wherein
   the plurality of hydrogen stations include an off-site hydrogen station that receives supply of hydrogen gas from a specific on-site hydrogen station,
   the off-site hydrogen station includes a compressor that compresses the hydrogen gas supplied from the specific on-site hydrogen station, an accumulator that accumulates the hydrogen gas compressed by the compressor, and a dispenser that fills the fuel cell vehicle with the hydrogen gas accumulated in the accumulator, and
   an adjustment margin of power consumption of the electrolysis device included in the specific on-site hydrogen station is calculated on the basis of a demand amount, supply amount, and inventory amount of hydrogen gas in the off-site hydrogen station and a demand amount, supply amount, and inventory amount of hydrogen gas in the specific on-site hydrogen station.
CLAUSE 5. The hydrogen supply system according to any one of clauses 1 to 4, further comprising a hydrogen production site that produces hydrogen gas to be supplied to at least one of the plurality of hydrogen stations, wherein
   the hydrogen production site includes the electrolysis device and the accumulator, and
   the management apparatus adjusts the power consumption amount of the plurality of electrolysis devices further on the basis of an adjustment margin of power consumption of the electrolysis device included in the hydrogen production site.
CLAUSE 6. The hydrogen supply system according to clause 5, wherein the adjustment margin of the power consumption of the electrolysis device included in the hydrogen production site is calculated on the basis of a production amount and inventory amount of hydrogen gas in the hydrogen production site, and a demand amount, supply amount, and inventory amount of hydrogen gas in the hydrogen station receiving the supply of hydrogen gas from the hydrogen production site.
CLAUSE 7. The hydrogen supply system according to any one of clauses 1 to 6, further comprising an organic hydride production site including an electrolysis device that produces an organic hydride by an electrolytic reaction consuming power supplied from the commercial power network, wherein
   the plurality of hydrogen stations include at least one of an on-site hydrogen station including a hydrogen production apparatus that produces hydrogen gas by a dehydrogenation reaction of the organic hydride supplied from the organic hydride production site, and an off-site station that receives supply of hydrogen gas produced by a dehydrogenation reaction of the organic hydride supplied from the organic hydride production site, and
   the management apparatus adjusts the power consumption amount of the plurality of electrolysis devices further on the basis of an adjustment margin of power consumption of the electrolysis device included in the organic hydride production site.
CLAUSE 8. The hydrogen supply system according to any one of clauses 1 to 7, wherein in a case where a command to increase power consumption is issued, the management apparatus determines an adjustment amount of power consumption of each electrolysis device on the basis of a difference between a current value of operation output and maximum rated power of each electrolysis device.
CLAUSE 9. The hydrogen supply system according to any one of clauses 1 to 8, wherein in a case where a command to increase power consumption is issued, the management apparatus determines an adjustment amount of power consumption of each electrolysis device on the basis of a difference between a current value of residual accumulation amount and maximum accumulation amount of the accumulator corresponding to each electrolysis device.
CLAUSE 10. The hydrogen supply system according to any one of clauses 1 to 9, wherein in a case where a command to reduce power consumption is issued, the management apparatus determines an adjustment amount of power consumption of each electrolysis device on the basis of a difference between a current value of operation output and minimum rated power of each electrolysis device.
CLAUSE 11. The hydrogen supply system according to any one of clauses 1 to 10, wherein in a case where a command to reduce power consumption is issued, the management apparatus determines an adjustment amount of power consumption of each electrolysis device on the basis of a current value of residual accumulation amount of the accumulator corresponding to each electrolysis device and a demand amount of hydrogen gas to be supplied from the accumulator corresponding to each electrolysis device.
CLAUSE 12. The hydrogen supply system according to any one of clauses 1 to 11, wherein the management apparatus updates a production plan of each electrolysis device such that excess and shortage of production amount of hydrogen gas caused by the adjustment of the power consumption of the plurality of electrolysis devices is eliminated or alleviated for each electrolysis device.
CLAUSE 13. A hydrogen supply system comprising a plurality of hydrogen stations for supplying hydrogen gas to a fuel cell vehicle, a plurality of hydrogen production sites that produce hydrogen gas to be supplied to at least one of the plurality of hydrogen stations, and a management apparatus that manages supply and demand of hydrogen gas of the plurality of hydrogen stations and the plurality of hydrogen production sites, wherein
   each of the hydrogen production sites includes an electrolysis device that produces hydrogen gas by an electrolytic reaction consuming power supplied from a commercial power network, and an accumulator that accumulates the hydrogen gas produced by the electrolysis device,
   each of the plurality of hydrogen stations includes a compressor that compresses the hydrogen gas supplied from at least one of the plurality of hydrogen production sites, an accumulator that accumulates the hydrogen gas compressed by the compressor, and a dispenser that fills the fuel cell vehicle with the hydrogen gas accumulated in the accumulator, and
   the management apparatus adjusts a power consumption amount of a plurality of electrolysis devices included in the hydrogen supply system, on the basis of a command for adjusting supply and demand of power of the commercial power network.
CLAUSE 14. A hydrogen station comprising:
   an electrolysis device that produces hydrogen gas by an electrolytic reaction consuming power supplied from a commercial power network;
   a compressor that compresses the hydrogen gas produced by the electrolysis device;
   an accumulator that accumulates the hydrogen gas compressed by the compressor;
   a dispenser that fills a fuel cell vehicle with the hydrogen gas accumulated in the accumulator; and
   a control device that controls a power consumption amount of the electrolysis device on the basis of a command for adjusting supply and demand of power of the commercial power network.
CLAUSE 15. A method for managing hydrogen supply and demand in a hydrogen supply system comprising a plurality of hydrogen stations for supplying hydrogen gas to a fuel cell vehicle, wherein
   the plurality of hydrogen stations include a plurality of on-site hydrogen stations,
   each of the on-site hydrogen stations includes:
      an electrolysis device that produces hydrogen gas by an electrolytic reaction consuming power supplied from a commercial power network;
      a compressor that compresses the hydrogen gas produced by the electrolysis device;
      an accumulator that accumulates the hydrogen gas compressed by the compressor; and
      a dispenser that fills the fuel cell vehicle with the hydrogen gas accumulated in the accumulator, and
      the method comprises:
         acquiring a command for adjusting supply and demand of power of the commercial power network;
         calculating an adjustment margin of power consumption of the electrolysis device of each on-site hydrogen station;
         determining an adjustment amount of power consumption of each electrolysis device within a range of adjustment margin of each electrolysis device such that a sum of adjustment amounts of power consumption of the plurality of electrolysis devices included in the hydrogen supply system becomes closer to an adjustment target amount of supply and demand of power included in the command; and
         adjusting the power consumption of each electrolysis device on the basis of the determined adjustment amount.

## Claims

1. A management center (40) comprising a management apparatus (42) for managing a first site (10a, 10b, 30) configured to produce hydrogen and a second site (10c, 10d, 10e, 10f, 10g, 10h) to which hydrogen is supplied from the first site, wherein
the management apparatus (42) is configured to adjust a power consumption amount of a hydrogen production device (12a, 12b, 32) included in the first site (10a, 10b, 30), on the basis of a command for adjusting supply and demand of power and information related to the second site.

2. The management center (40) according to claim 1, wherein the management apparatus (42) is configured to create a transportation plan of hydrogen from the first site to the second site.

3. The management center (40) according to claim 1 or 2, wherein the information related to the second site includes an inventory amount of hydrogen in the second site and/or a demand amount of hydrogen in the second site.

4. The management center (40) according to any one of claims 1-3, wherein the management apparatus (42) is configured to manage a trailer for transporting hydrogen produced by a plurality of hydrogen production devices included in the first site to a plurality of second sites.

5. The management center (40) according to any one of claims 1-4, wherein
the management apparatus (42) is configured to adjust a power consumption amount of the hydrogen production device, on the basis of a supply and demand adjustment capability of the first site.

6. The management center (40) according to claim 5, wherein the adjustment margin is based on at least one of:
an operation margin of the hydrogen production device;
an accumulation margin of a hydrogen tank in the first site;
a current value of a hydrogen inventory amount of the hydrogen tank in the first site; and
a demand amount of hydrogen.

7. The management center (40) according to any one of claims 1-6, wherein the management apparatus (42) is configured to determine an adjustment amount of power consumption of the hydrogen production device, on the basis of the hourly electricity charges in the commercial power network that supplies power to the hydrogen production device.

8. The management center (40) according to any one of claims 1-7, wherein
the management apparatus (42) is configured to update an operation plan of the hydrogen production device, when adjusting the power consumption amount of the hydrogen production device, and wherein
the management apparatus is configured to update the operation plan so that:
an adjustment time for a hydrogen production amount of the hydrogen production device is longer than an adjustment time for the supply and demand of power; and/or
the hydrogen production amount of the hydrogen production device is adjusted in a time period prior to a time period in which the supply and demand of power is adjusted.

9. The management center (40) according to any one of claims 1-8, wherein
the first site (10a, 10b, 30) includes a plurality of hydrogen production devices (12a, 12b, 32), and
the management apparatus (42) is configured to determine a distribution rate of adjustment amounts of power consumption of the plurality of hydrogen production devices.

10. The management center (40) according to any one of claims 1-9, wherein the first site (10a, 10b, 30) is a hydrogen production site (30) not including a dispenser for supplying hydrogen to a fuel cell vehicle or an on-site hydrogen station (10a, 10b) including a dispenser (18a, 18b) for supplying hydrogen to a fuel cell vehicle.

11. The management center (40) according to any one of claims 1-10,
wherein the second site (10c, 10d, 10e, 10f, 10g, 10h) is a hydrogen consumption site configured to consume hydrogen or an off-site hydrogen station including a dispenser for supplying hydrogen to a fuel cell vehicle, and
wherein the second site (10c, 10d, 10e, 10f, 10g, 10h) does not include a hydrogen production device.

12. The management center (40) according to any one of claims 1-11, wherein a hydrogen production capacity of the hydrogen production device (12a, 12b, 32) included in the first site (10a, 10b, 30) is larger than a hydrogen production capacity of a hydrogen production device included in a hydrogen station (10a, 10b, 10c, 10d, 10e, 10f, 10g, 10h) configured to supply hydrogen to a fuel cell vehicle.

13. The management center (40) according to any one of claims 1-12, wherein the management apparatus (40) is configured to transmit, to the first site, an operation output of the hydrogen production device and/or an adjustment amount of power consumption of the hydrogen production device.

14. The management center (40) according to any one of claims 1-13, wherein the management apparatus (42) is configured to receive, from the first site, a hydrogen production amount of the hydrogen production device and a hydrogen inventory amount of a hydrogen tank included in the first site.

15. The management center (40) according to any one of claims 1-14,
wherein the management apparatus (42) is configured to receive, from the first site, a hydrogen inventory amount of a hydrogen tank included in the first site, and
wherein the management apparatus (42) is configured to receive, from the second site, a hydrogen inventory amount of a hydrogen tank included in the second site.
